# EUROPEAN PATENT SPECIFICATION

(11) **EP 3 087 126 B1**
(45) Date of publication and mention of the grant of the patent: **17.05.2023**
(21) Application number: 14816278.7
(22) Date of filing: 19.12.2014
(51) Int. Cl.: C08J 9/00, C08J 9/32, C08J 9/14, C08J 9/18, C08J 9/20

(54) **USE OF CENOSPHERES FOR IMPROVING THE SELF-EXTINGUISHING PROPERTIES OF POLYMER FOAM PREPARED FROM VINYL AROMATIC MONOMER AND CONTAINING ATHERMANOUS ADDITIVE**
VERWENDUNG VON CENOSPHÄREN ZUR VERBESSERUNG DER SELBSTVERLÖSCHENDEN EIGENSCHAFTEN VON POLYMERSCHAUM AUS AROMATISCHEN VINYLMONOMEREN MIT ATHERMANEM ADDITIV
UTILISATION DE CÉNOSPHÈRES POUR AMÉLIORER LES PROPRIÉTÉS D'AUTO-EXTINCTION DE MOUSSE POLYMÈRE PRÉPARÉE À PARTIR D'UN MONOMÈRE VINYLAROMATIQUE ET CONTENANT UN ADDITIF ATHERMANE

(30) Priority: 27.12.2013 EP 13461566
(43) Date of publication of application: 02.11.2016
(73) Proprietor: Synthos Dwory 7 spolka z ograniczona odpowiedzialnoscia, 32-600 Oswiecim (PL)
(72) Inventor: KONDRATOWICZ, Filip Lukasz, 30-382 Kraków (PL); MIKOSZEK, Marzena, 41-707 Ruda Slaska (PL); KOZUCH, Karol, 43-190 Mikolów (PL); UTRATA, Kamil, 43-229 Pszczyna (PL); CHYLASZEK, Marcin, 32-650 Witkowice (PL); ROGOZA, Jaroslaw, 55-093 Kielczów (PL)
(74) Representative: Eisenführ Speiser
(86) International application number: PCT/EP2014/078908
(87) International publication number: WO 2015/097112

(56) References cited:
- WO-A1-2006/058733
- WO-A1-2012/032022
- US-A- 5 866 641
- US-A1- 2013 015 389
- US-B2- 7 888 409

## Description

The present invention relates to the use of cenospheres for improving the self-extinguishing properties of foam that is prepared from polymer based on vinyl aromatic monomer (and optionally one or more comonomers) and that contains one or more athermanous additives. The invention also relates to processes for the preparation of expandable polymer granulate, the expandable polymer granulate, and polymer foam made from such granulate. The invention further relates to a compounded masterbatch comprising two preferred athermanous additives.

It is generally known that the addition of athermanous fillers (such as carbon-based fillers or minerals) decreases the thermal conductivity of polymers. Examples for such types of polymers are those obtained by polymerization of vinyl aromatic monomers (in particular of styrene) and optionally comonomers. Other examples for such type of polymers are those obtained by extrusion of polystyrene and its copolymers. Typically, fillers that can absorb infrared radiation are added.

For instance, EP 0 620 246 A1 teaches moulded bodies from rigid polystyrene foam or polystyrene particle foam for insulation purposes. The polystyrene foam contains an athermanous material as an additive. Examples for the athermanous material are metal oxides (such as Fe₂O₃, Al₂O₃ and SiO₂).

Cenospheres are a material consisting of lightweight, inert, hollow spheres made largely of silica and alumina and filled with air or inert gas. Cenospheres are typically produced as a byproduct, or waste, of coal combustion at thermal power plants. They are used as fillers and as rheology improvers in a variety of applications, such as plastics, rubbers, resins, and concrete. For instance, GB 100 98 76 teaches polyvinyl chloride pastes or plastisols that are foamed using cenospheres. Polymer foams that are filled with cenospheres are termed syntactic foam.

Cenospheres are suitable as athermanous additives for several types of concrete and for polymer compositions such as coatings or foams. Even though cenospheres lower the thermal conductivity of foams when added in relatively large amounts up to 20 % for example, such foams containing relatively large amounts of cenospheres have worse final mechanical properties (such as compressive strength). The same is true if cenospheres are added to building materials such as concrete.

The use of cenospheres is for instance described in US patent 5,866,641. This document teaches a process for the production of light weight cellular composites of wood waste and thermoplastic polymers. It mentions as a side effect the tendency of cenospheres to improve the fire retardancy and the insulative and strength characteristics of the composite material. US 7,888,409 B2 relates to polycarbonate resin compositions containing cenospheres. US 2013/0015389 A1 teaches polyurethane foam insulation materials comprising cenospheres. However, the particular requirements of polymer foams prepared from polymer based on vinyl aromatic monomer, in particular those containing athermanous additives, are not addressed in the prior art.

WO 2006/058733 A1 teaches expandable styrene polymer granulates, which contain a) between 5 and 50 wt. % of a filler, selected from pulverulent inorganic materials such as talcum, chalk, kaolin, aluminium hydroxide, aluminium nitrite, aluminium silicate, barium sulphate, calcium carbonate, titanium dioxide, calcium sulphate, silicic acid, quartz powder, aerosil, alumina or wollastonite and b) between 0.1 and 10 wt. % carbon black or graphite.

WO 2012/032022 A1 teaches an expandable vinyl aromatic polymer which comprises: a) a matrix of a vinyl aromatic polymer, b) 1-10% by weight calculated with respect to the polymer (a), of an expanding agent englobed in the polymeric matrix, c) 0.1to 5% by weight calculated with respect to the polymer (a), of talc having a mean diameter above about 8 pm, said mean diameter being measured by Laser Mastersizer according to standard ISO 13320-1,the BET of the talc being in in the range 0.5-25 m²/g, d) carbon black in a proportion sufficient for the foamed material obtained from the expandable vinyl aromatic polymer to have a thermal conductivity of about 34 m W/m°K or lower, e) 0-20% by weight, calculated with respect to the polymer (a), of one or more fillers, other than talc and carbon black, homogeneously distributed in the polymeric matrix.

There is an increasing demand for expanded vinyl aromatic polymers with both low thermal conductivity and good dimensional stability. Moreover, there is increasing demand for expanded vinyl aromatic polymers having sufficiently low flammability and self-extinguishing properties.

It has now surprisingly been found that the self-extinguishing properties of polymer foam
a) that is prepared from polymer based on vinyl aromatic monomer (and optionally one or more comonomers) and
b) containing one or more athermanous additives,
are improved (the improvement being measured in accordance with DIN 4102 B1 and B2 test method) by the use of cenospheres having
i) a particle size distribution, as determined by laser diffraction, in the range of 5-600 µm;
ii) a mineral composition of
   - 27-33 wt. % of Al₂O₃,
   - 55-65 wt. % of SiO₂,
   - 4-8 wt.% of Fe₂O₃, and
   - optionally further oxides; and
iii) a gas composition of
   - 30-95 %, preferably 50-85 % of CO₂,
   - 5-70 %, preferably 15-50 % of nitrogen, and
   - optionally further gases.

### Detailed description of the invention

Thus, in a first aspect, the invention relates to the use of cenospheres having
i) a particle size distribution, as determined by laser diffraction, in the range of 5-600 µm;
ii) a mineral composition of
   - 27-33 wt.% of Al₂O₃,
   - 55-65 wt.% of SiO₂,
   - 4-8 wt.% of Fe₂O₃, and
   - optionally further oxides;
iii) a gas composition of
   - 30-95 %, preferably 50-85 % of CO₂,
   - 5-70 %, preferably 15-50 % of nitrogen, and
   - optionally further gases;
for improving the self-extinguishing properties of polymer foam, said foam
a) being prepared from polymer based on vinyl aromatic monomer (and optionally one or more comonomers) and
b) containing one or more athermanous additives, the improvement being measured in accordance with DIN 4102 B1 and B2 test method.

Preferably, cenosphere products of the Omya Fillite type are used.

It is further preferred that the cenospheres have a hardness of 4 to 6 on the Mohs scale, preferably about 5.

Moreover, it is preferred that the cenospheres have an average wall thickness of 2 to 20 % of the sphere diameter, preferably 5 to 10%.

In a preferred embodiment, the cenospheres have a melting temperature of 1000-1500 °C, preferably 1150-1400°C.

In a preferred embodiment, the cenospheres have a thermal conductivity of 0.02 to 1.0 W/m·K, preferably 0.06-0.3 W/m·K.

It is further preferred that the cenospheres have a moisture content of 0.01-1.5%, preferably 0.05-0.8 %.

Finally, it is in terms of the cenospheres preferred that they have a crush strength of 70-400 kg/cm², preferably 90-250 kg/cm².

Preferably, bulk density is measured in accordance with Omya test method (GB LTM 001), and particle size is preferably determined according to test method (GB LTM 016). Preferably, the moisture content is determined according to Omya test method GBRN LTM 007.

The amount of cenospheres is 0.1-20 % by weight, preferably 0.5-12 % by weight, in particular 1-8 % by weight, based on the weight of polymer.

### I) Polymer composition

The polymer used in accordance with the invention is based on one (or more) vinyl aromatic monomer(s), preferably styrene, and optionally one or more comonomers, i.e. it is a homopolymer or a copolymer.

Preferably, the athermanous additive is selected from inorganic powder materials, graphite, petroleum coke, graphitized carbon black, graphite oxides, graphene, and mixtures thereof, and is preferably selected from silica, carbon black, calcium phosphate, and graphite.

According to the preferred embodiment of the present invention, the total amount of athermanous additive b) is 0.1 to 15 wt.% based on the weight of polymer, preferably 1 to 10 wt.% based on the weight of polymer, in particular 2 to 8 wt.% based on the weight of polymer.

The polymer composition most preferably comprises, in addition to the polymer component a), a mineral component ba) and carbon black bb), and typically and preferably a variety of further additives, as set out below.

Most preferred, the athermanous additive component b) is a combination of
ba) a mineral component containing amorphous silica, calcium phosphate, or mixtures thereof, and
bb) carbon black.

In terms of athermanous component b), it is most preferred that
ba1) the silica is amorphous and has
   - a BET surface of 3 to 80 m²/g,
   - a particle size distribution within the range of from 3 nm to 1,000 nm, and
   the silica, if used, is present in an amount of 0.1 to less than 2 wt.%, based on the weight of the polymer,
ba2) the calcium phosphate has a particle size of 0.1 µm to 20 µm, and
   the calcium phosphate, if used, is present in an amount of 0.1 to 10 wt.%, based on the weight of polymer, and
bb) the carbon black has
   - a BET surface of more than 40 up to 250 m²/g, and
   - a sulphur content in the range of from 50 to 20,000 ppm, as measured according to ASTM D 1619, and
   the carbon black is present in an amount of 0.1 to 12 wt.%, based on the weight of the polymer.

### Silica

The silica as preferably used is amorphous and has the following specific properties:
(i) a BET surface, as measured according to the procedure explained below, in a range of from 3 to 80 m²/g and,
(ii) a particle size distribution within a range of from 3 nm to 1,000 nm.

The method to determine the silica's BET surface is based on the standards ASTM C1069 and ISO 9277 and is conducted as follows: in the first step, 2 to 5 g sample is dried at 105°C and placed in a desiccator for cooling and further degassing. Subsequently, 0.3 to 1.0 g of the dry material is weighed into a test tube and placed in the degassing unit for about 30 min. Afterwards, the sample is transferred to the measuring unit and is measured using the Micromeritics Tristar 3000 instrument.

The silica advantageously has a BET surface of from 5 to 70 m²/g, preferably 8 to 60 m²/g, such as 10 to 50 m²/g, in particular 15 to 40 m²/g, more preferably 20 to 30 m²/g, such as about 25 m²/g.

Moreover, the silica as preferably used is defined as having a particle size distribution, as measured according to the procedure detailed below, of 3 nm to 1000 nm.

The method to determine the particle size distribution is conducted as follows: in the first step, 45 g of distilled water and 5 g of sample are placed into a beaker and stirred to allow the entire sample to be wetted. Subsequently, the sample is dispersed in an external ultrasonic probe for 5 min at 100 % amplitude. The measurement is performed automatically using the primary agglomerate program in a Malvern MasterSizer 2000 device.

It is preferred that the particle size distribution of the silica is within a range of 20 to 800 nm, preferably 30 to 600 nm, such as 40 to 400 nm.

According to the present invention, the silica, if present, is used in an amount of from 0.1 to less than 2 wt.%, based on the weight of the polymer. Preferably, the silica is spherically shaped silica.

It is most preferred that the silica ba1) comprises the material Sidistar from ELKEM, and most preferred is that ba1) is Sidistar T120.

### Calcium phosphate

As mentioned above, the calcium phosphate preferably used according to the invention has a particle size, as measured by laser diffraction, of 0.1 µm to 20 µm. It is preferred that the particle size is from 1 µm to 18 pm, such as 2 µm to 15 µm. The calcium phosphate, if present, is typically used in an amount of from 0.1 to 10 wt.%, based on the weight of polymer.

The calcium phosphate is preferably tricalcium phosphate (specifically a type of hydroxyapatite).

According to one preferred embodiment, the mineral component ba) comprises ba1) the specific type of silica. According to a second preferred embodiment, the mineral component ba) comprises ba2) the specific type of calcium phosphate. According to a third preferred embodiment, the mineral component ba) comprises both ba1) the specific type of silica and ba2) the specific type of calcium phosphate.

Moreover, it is not necessary in accordance with the above preferred embodiment that the stated constituents of the combination, i.e. ba1) and/or ba2) and bb), are added at the same time. Instead, it is sufficient that ba1) and/or ba2) and bb) are eventually present in the granulate (expandable polymer) or foam (expanded polymer).

The total amount of component ba), i.e. the sum of the amounts of ba1) silica as specified (if present) and ba2) calcium phosphate as specified (if present), respectively, is typically 0.1 to less than 12 wt.% based on the weight of polymer. If both ba1) the specific silica and ba2) the specific calcium phosphate are present, then the typical amount is 0.2 wt.% based on the weight of polymer.

### Carbon Black

The carbon black as preferably used has a BET surface, as measured according to ASTM 6556, of more than 40 to 250 m²/g. It is preferred that the BET surface of the carbon black is from 41 to 200 m²/g, preferably from 45 to 150 m²/g, in particular from 50 to 100 m²/g.

The sulphur content of the carbon black is typically in the range of from 50 to 20,000 ppm, as measured according to ASTM D1619, preferably from 3,000 to 10,000.

The carbon black, if present, is preferably used in an amount of 0.1 to 12 wt.%, based on the weight of the polymer.

In addition to the preferred constituents ba) and bb) above, the materials according to the invention (namely the polymer composition, the granulate, and the foam) may contain further additives, as is set out below.

For instance, a flame retardant system may be present, which is usually a combination of two types of compounds, namely a brominated aliphatic, cycloaliphatic, aromatic or polymeric compound containing at least 50 wt.% of bromine, and a second compound (so called synergistic compound) which can be bicumyl (i.e. 2,3-dimethyl-2,3-diphenylbutane) or 2-hydroperoxy-2-methylpropane.

Most preferably, and for a further reduction of the thermal conductivity of the polymer foams, the combination (of ba) silica and/or calcium phosphate and bb) carbon black) further comprises bc) nanoparticles of metal oxide, the nanoparticles having a 90% particle size of less than 100 nm (on the basis of a BET standard measurement), preferably a 90% particle size less than 50 nm.

In a preferred embodiment, the metal oxide is zinc oxide, magnesium oxide, or a mixture thereof, and it is most preferred that the metal oxide bc) is zinc oxide.

Preferably, the carbon black is combined with the nanoparticles of metal oxides such as zinc oxide (ZnO) or magnesium oxide (MgO), especially nano ZnO: 90% particle size less than 50 nm (on the basis BET standard measurement).

The metal oxides preferably have not more than 2% of contaminations.

A preferred weight ratio of metal oxide to carbon black is from 1:25 to 1:10, more preferably from 1:10 to 1:5 and in particular 1:5 to 1:2.5.

Moreover, the content of carbon black may cause thermal instability. That is why thermal aging of foams comprising carbon black has a significant influence on the final dimensions of moulded blocks. Carbon black may decrease the glass transition temperature of vinyl aromatic polymers or generally increase foam heat capacity, which leads to the shrinking or change of dimensions of the moulded blocks during thermal conditioning.

The above-mentioned phenomena may undesirably cause the formation of scrap during the sectioning of the moulded blocks. Thus, in a preferred embodiment of the present invention, the dimensional stability of foam blocks made of vinyl aromatic polymers comprising carbon black is improved by preparing polymer foam from a vinyl aromatic copolymer with p-tert-butylstyrene comonomer, or some other sterically hindered styrene comonomer.

In other words, the addition to the styrene monomer of a specific styrene comonomer possessing steric hindrance, in particular p-tert-butylstyrene, increases the glass transition temperature of such a vinyl aromatic copolymer. In such a manner, the addition of a specific styrene comonomer to the styrene monomer improves the thermal stability of vinyl aromatic copolymer, which subsequently leads to better dimensional stability of moulded blocks made thereof.

Moreover, the polymer is preferably a styrene homopolymer or styrene copolymer. In particular, the polymer is a styrene copolymer, and the comonomer is p-tert-butylstyrene.

The vinyl aromatic copolymer is preferably comprised of 1 to 99 wt.% of styrene monomer and correspondingly 99 to 1 wt.% of p-tert-butylstyrene monomer, as follows (amounts in wt.%, based on the total amount of monomer):

| **Monomer** | **Preferred (wt%)** | **More preferred (wt%)** | **Most preferred (wt%)** |
|---|---|---|---|
| Styrene | 1-99 | 50-98 | 75-95 |
| p-tert-Butylstyrene | 99-1 | 2-50 | 25-5 |

### II) Processes for the preparation of expandable polymer granulate

In a second aspect, the invention relates to a process for the preparation of expandable polymer granulate. Such granulate may be prepared by compounding in an extrusion process, alternatively by suspension polymerization, or further alternatively in a continuous mass polymerization process.

Furthermore, a masterbatch may be used in the preparation of expandable polymer granulate, the masterbatch being obtained by compounding of
i)
   a) silica and/or calcium phosphate,
   b) carbon black, and
   optionally c) nanoparticles of metal oxide, the nanoparticles having a 90% particle size of less than 100 nm (on the basis of a BET standard measurement), and preferably of less than 50 nm,
ii) styrene homo- or copolymer, and
optionally iii) styrene monomer,
wherein the total amount of component i) in the masterbatch is 10 to 60 wt.%, and wherein component i) has been coated with one or more silanes during compounding of the masterbatch.

### IIa) Preparation of expandable polymer granulate in an extrusion process

According to the first embodiment of the second aspect, expandable polymer granulate is prepared in an extrusion process comprising the following steps:
i) feeding vinyl aromatic polymer or copolymer into an extruder,
ii) adding athermanous additive or additives (such as ba) silica and/or calcium phosphate and bb) carbon black) and cenospheres, and optionally thermal stabiliser and flame suppressant,
iii) injecting blowing agent into the melt of polymer or copolymer,
iv) extruding the homogenous blend, and
v) pelletizing the blend in an underwater pelletizer, so as to obtain the granulate.

In step i), vinyl aromatic polymer (in particular polystyrene or its vinyl copolymer for instance with p-tert-butylstyrene, or the mixture of different types of polystyrene) is fed into a single or twin screw extruder. The temperature in the extruder is preferably in the range of 100-250 °C, more preferably of 150-230 °C. Preferably, the polymer has an average molecular weight in the range of from 90 to 400 kg/mol.

In step ii), athermanous additive or additives is/are added in the form of a masterbatch or in the form of powders; the addition of the compacted form is also possible. Other additives such as nucleating agents can be added together with the athermanous fillers or with the flame retardant system (see above), thermal stabilizers and bromic acid scavengers may then be added.

In order to improve the self-extinguishing properties of the final product, cenospheres may then be added in the form of a masterbatch or in the form of powder. Cenospheres can be introduced to the process together with athermanous fillers or together with flame retardant.

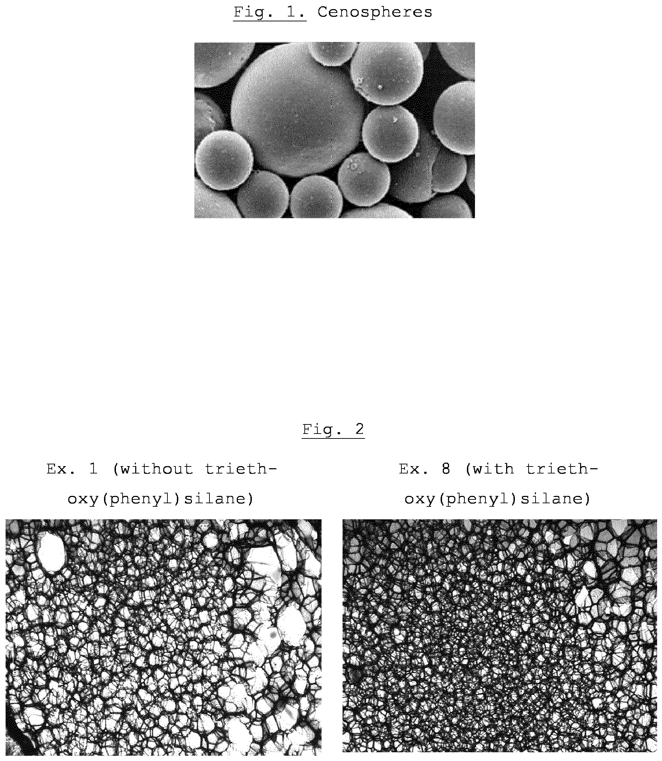

It was observed that proper dispersion of additives in the polymer melt improves the cell structure uniformity of a final product (foam). More uniform structure is achieved when the dispersion of particles and flame retardant is homogenous. It was further noticed that addition of specific silanes, in particular triethoxy(phenyl)silane, to the flame retardant system improves its further dispersion in polymer matrix foam and thus influences the creation of a more uniform cell structure (see Fig. 2 below).

Because the polymeric brominated styrene-butadiene rubber is quite sensitive to the thermal degradation, a package of thermal stabilizers and bromic acid scavenger may be used to improve its thermal stability at 150 to 230 °C. It is preferably used in a total amount not higher than 2 wt.% by the weight of solid additives.

Subsequently, in step iii), the blowing agent is injected and dissolved in the polymer melt to the last sections of the main extruder. Typically, blowing agents used are n-pentane, cyclopentane, i-pentane, combination of two of them or their mixture. In addition, halogenated aliphatic hydrocarbons or alcohols containing from 1 to 3 carbons are commonly used.

Then the mass is in step iv) transported and cooled in the "cooling extruder" from a temperature 230 °C down to 150 °C. The flame retardant with thermal stabilizers, acid scavenger (with or without nucleating agent) is added through the side arm extruder connected to the last section of the cooling unit.

Finally, in step v), the homogenous polymer or copolymer blend comprising athermanous additive (such as ba) silica and/or tricalcium phosphate, bb) carbon black), and nucleating agent, flame retardant with thermal stabilizers and acid scavenger, cenospheres and blowing agent is extruded through the static mixer, polymer melt filter, diverter valve, finally die-holes and cut by rotating knifes in a pressurized underwater pelletizer unit in order to obtain micro pellets.

Pellets are preferably pre-treated by applying a coating of a mixture of mono- and triglycerides of fatty acids and stearic acid salts and then pre-expanded by means of steam.

### IIb) Preparation of expandable polymer granulate in suspension

According to a second embodiment of the second aspect, expandable polymer granulate is prepared in an aqueous suspension polymerization process comprising the steps:
i) providing a mixture comprising
   11) at least one suspending agent which is an inorganic acid salt,
   12) at least one suspension stabilizer selected from the group of anionic surface active compounds and/or high molecular weight compounds (e.g. hydrophilic and/or amphiphilic polymers), and
   i3) water (preferably demineralized water),
ii) adding a vinyl aromatic monomer and optionally one or more comonomers to the mixture, and subsequently adding
   ii1) optional polymeric suspension aid,
   ii2) athermanous filler,
   ii3) flame retardant,
   ii4) cenospheres, and
   ii5) at least one peroxide (or the mixture of two or more peroxides) as reaction initiator, and then polymerizing the monomer and optional comonomers in the suspension phase,
iii) continuing the polymerization (preferably until the concentration of vinyl aromatic monomer(s) is below 1000 ppm by weight, based on the weight of the polymer),
iv) adding the blowing agent during or after the polymerization step,
v) cooling, and then separating the granulate from the water.

The athermanous fillers (in particular silica, calcium phosphate, or mixtures thereof, and b) carbon black) may be added in the form of a masterbatch, they may be introduced at the beginning of the suspension polymerization process, or may be dissolved in the monomer and/or a mixture of the monomer and comonomer.

According to the present invention, athermanous additive, such as ba) silica and/or calcium phosphate component and bb) carbon black, may be introduced in step ii) or in step iii).

The granulate is prepared using well known inorganic salts of phosphoric acid, such as types of calcium phosphate, magnesium phosphate, or a combination of salts as suspending agents. These salts may be added to the reaction mixture in a finely divided form, or as a product of an *in situ* reaction (for example, between sodium phosphate and magnesium sulphate).

The salts are supported in their suspending action by anionic surface-active compounds, such as sodium dodecylobenzene sulfonate or sodium poly(naphthalene formaldehyde) sulfonate. Those surface-active compounds can be also being prepared *in situ* using their precursors such as sodium metabisulfite and potassium persulfate. The suspension can be also stabilized by high molecular weight organic suspension stabilizer, such as polyvinyl alcohol or hydroxyethylcellulose.

To improve the stability of the suspension, up to 30 wt.% of polymer (fresh vinyl aromatic polymer or waste vinyl aromatic polymer from a previous polymerization) may be added as the optional suspension aid, preferably 5 to 15 wt.%, based on the vinyl aromatic monomer amount. It increases the viscosity of the reagent mixture (monomer with all additives), which facilitates the creation of a suspension. The same or similar effect can be achieved by mass pre-polymerization of the monomer or mixture of comonomers and additives until the suitable melt viscosity is obtained (as for 1% to 30% of polymer concentration) .

In the most preferred process, before start of the polymerization step iii), athermanous fillers in the form of concentrated masterbatch are added to the styrene and/or its mixture with comonomer, particularly p-tert-butylstyrene. The masterbatch can contain from 10 to 60 % of athermanous fillers - carbon black, or spherically shaped amorphous silicon dioxide (silica), calcium phosphate and nano zinc oxide pre-silanized or silanized in the masterbatch compounding process by the triethoxy(phenyl)silane to decrease its hydrophilic properties. Athermanous fillers can be combined with carbon black in one masterbatch or all can be added in the form of silanized powders. The same is referred to flame suppressors, particularly cenospereres.

The polymerization is then continued in aqueous suspension phase in the presence of the above-mentioned suspending agents, suspension stabilizers, athermanous fillers, flame retardants and suppressors, optionally at least in the presence of suspension aids.

The polymerization process is triggered by initiators. Normally, two organic peroxides are used as initiators. The first peroxide, with a half-life of one hour at 80-95°C, is used to start and run the reaction. The other, with a half-life of one hour at 105-125°C, is used during the following polymerization process continued in the higher temperature, so called high temperature cycle (HTC).

The end of the process is typically indicated by a concentration of residual vinyl monomers of below 1000 ppm by weight, based on the mass of vinyl aromatic polymer or copolymer. The vinyl aromatic polymer or copolymer which is obtained at the end of the process typically has an average molecular mass (Mw) ranging from 50 to 600 kg/mol, preferably from 150 to 450 kg/mol, most preferably from 100 to 350 kg/mol. The procedure for controlling molecular mass in suspension polymerization, is well known and described in detail in Journal of Macromolecular Science, Review in Macromolecular Chemistry and Physics C31 (263) p. 215-299 (1991).

During the polymerization process, conventional additives can be added directly to the monomers, their solution with suspension aid, to the pre-polymer, or to the suspension. Additives such as flame retardant systems, nucleating agents, antistatic agents, blowing agents and colorants during the process stay in the polymer drops and are thus present in the final product. The concentrations of conventional additives are the same as for the extrusion process, as set out above.

The flame retardant systems suitable for the present invention are similar to those used in the extrusion process described above. One suitable system is the combination of two types of compounds, namely a brominated aliphatic, cycloaliphatic, aromatic or polymeric compound containing at least 50 wt.% of bromine (such as hexabromocyclododecane, pentabromomonochloro-cyclohexane, or a polymeric bromine compound, specifically brominated styrene-butadiene rubber and a second compound called synergistic compound which can be e.g. initiator of peroxide - dicumyl peroxide, cumene hydroxide, and 3,4-dimethyl-3,4-diphenylbutane. The content of flame retardant system is typically in the range of 0.2 to 5.0 wt.% with respect to the total weight of vinyl aromatic polymer (weight of monomer(s) plus weight of polymer if added on the start), preferably between 1 and 3 wt.%. The ratio between bromine compound and synergistic compound is preferably in the range from 1:1 to 15:1 weight to weight, usually from 3:1 to 5:1. The flame suppressant (cenospheres) is added in the same way as athermanous fillers, in the form of concentrated masterbatch up to 60 % or in the form of powder; concentrations are the same as for extrusion process, as set out in IIa) above.

The blowing agent or agents are preferably added during the polymerization to suspension phase and are selected from aliphatic or cyclic hydrocarbons containing from 1 to 6 carbons and their derivatives. Typically used are n-pentane, cyclopentane, i-pentane, combination of two of them or their mixture. In addition, the halogenated aliphatic hydrocarbons or alcohols containing from 1 to 3 carbons are commonly used. The blowing agent or agents can also be added after the end of polymerization.

At the end of the polymerization, spherical particles of expandable styrenic polymer are obtained as granulate, with an average diameter range of 0.3 to 2.3 mm, preferably from 0.8 to 1.6 mm. The particles can have different average molecular mass or molecular mass distribution depending on their size, but all contain used mentioned additives dispersed homogenously dispersed in the polymer matrix.

In the final step after the HTC step, the mass is cooled down to e.g. 35°C, and the polymer granulate is separated from the water, preferably in a centrifuging process. The particles are then dried and preferably coated with a mixture of mono- and triglycerides of fatty acids and stearic acid salts.

After discharging the particles from the reactor, they are typically washed: first with water, then with non-ionic surface active agent in aqueous solution, and finally again with water; they are then desiccated and dried with hot air having a temperature in the range 35-65°C.

The final product is typically pre-treated by applying a coating (the same as for extruded granulate) and can be expanded by the same method as the extrusion product.

### IIc) Preparation of expandable granulate in continuous mass

According to a third embodiment of the third aspect, expandable polymer granulate is prepared in a continuous mass process comprising the following steps:
i) providing continuously to a mass prepolymerization reactor (or the first from a cascade reactor) a stream of:
   i1) vinyl aromatic monomer and optionally at least one comonomer (preferably p-tert-butylstyrene),
   12) at least one additive solution, and
   i3) optionally recycled monomer,
ii) continuing polymerization in the prepolymerization reactor or the sequence of cascade reactors,
iii) adding of athermanous fillers (such as ba) silica and/or calcium phosphate (preferably tricalcium phosphate) and bb) carbon black) with or without nano metal oxide, and cenospheres, and optionally further additives,
iv) degassing the polymer,
v) feeding the polymer in molten state into the extruder, preferably directly from the polymerization plant,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate.

The reactor or cascade reactor is preferably arranged horizontally. If a cascade reactor is used, then there are preferably up to 5 reactors, in particular up to 4, such as three reactors.

The continuous mass polymerization is process congruous to extrusion process but the vinyl aromatic polymer or copolymer together with athermanous fillers and flame suppressant is used in molten state and feeding extruder directly from the polymerization plant.

The mass polymerization reactor (or first from cascade reactors) is fed continuously by vinyl aromatic monomer particularly styrene, and optionally by its vinyl aromatic comonomer, for instance p-tert-butylstyrene.

At this stage, athermanous fillers in the form of masterbatch or in the form of powders are fed into the mass polymerisation reactor, one or more additives and recycled monomer recovered from the process.

The athermanous additives (e.g. masterbatches) are preferably dissolved in the vinyl aromatic monomer or before feed to the polymerization reactor.

The polymerisation reaction is initiated thermally, without addition of initiators. In order to facilitate heat collection, polymerisation is generally carried out in presence of for instance monocyclic aromatic hydrocarbon.

The prepolymerised mass from the pre-polymerisation reactor is pumped through the sequence of several horizontal reactors, and the polymerisation reaction is subsequently continued.

At the end of the mass polymerization stage, the rest of unpolymerized monomer is removed by degassing of the melt.

A vinyl polymer in molten state, produced in mass polymerization and containing athermanous fillers (e.g. carbon black with or without nano metal oxide and silica or/and calcium phosphate, and cenospheres as flame suppressant) are fed into the extruder at the temperature in the range of from 100 to 250 °C, preferably from 150 to 230 °C. In the next stage, the flame retardant system and nucleating agent is fed to the polymer melt. A combination of two types of flame retarding compounds can be used, namely a brominated aliphatic, cycloaliphatic, aromatic or polymeric compound containing at least 50 wt.% of bromine, and a second compound called synergistic compound, which can be bicumyl (2,3-dimethyl-2,3-diphenylbutane) or 2-hydroperoxy-2-methylpropane.

The concentrations of additives are the same as for the extrusion process, as set out above.

In the following step, the blowing agent is injected into the molten polymer blend and mixed.

The blowing agent or agents are the same as for the suspension process, i.e. selected from aliphatic or cyclic hydrocarbons containing from 1 to 6 carbons and their derivatives.

The polymer with all additives and blowing agent is subsequently extruded to give expandable beads.

The homogenous polymer blend comprising carbon black, silica, cenospheres, additives and blowing agent is pumped to the die, where it is extruded through a number of cylindrical die-holes with 0.5-0.8 mm of diameter, immediately cooled by a water stream and cut with a set of rotating knives in pressurized underwater pelletizer, to receive micropellets (granulate).

The beads are transported by water, washed, drained off and fractioned. The final product is pre-treated in the same way, as it is in the suspension and extrusion processes.

### III) Expandable polymer granulate

In a third aspect, the invention relates to expandable polymer granulate (particles) as prepared by the IIa) extrusion or IIb) suspension process or IIc) the continuous mass polymerization.

Preferably, the parameters relating to the silica, calcium phosphate, carbon black, nano metal oxides, cenospheres and furthermore the use of styrene copolymer with p-tert-butylstyrene, set out above in relation to the process equally apply to the expandable polymer.

Preferably, the expandable polymer further comprises one or more (athermanous) additives selected from inorganic powder materials, graphite, petroleum coke, graphitized carbon black, graphite oxides, graphene, and mixtures thereof, preferably silica, carbon black, calcium phosphate, and graphite.

### IV) Expanded polymer foam

In a fourth aspect, the invention relates to expanded polymer foam, as obtained by expansion of the above-mentioned granulate.

The foam in accordance with the invention typically has a density of 10 to 30 kg/cm³, and a thermal conductivity of 25 to 35 mW/K·m.

It is noted that, unlike the properties of the starting materials, the properties of additives as contained in the granulate or foam are notoriously difficult to determine. It is often considered more appropriate to characterize the additives in granulate and foam with reference to the properties of the additives as initially used.

The advantages of the present invention become apparent from the following examples. Unless indicated otherwise, all percentages are given by weight.

Moreover, whenever reference is made in the description to an amount of additive "by weight of polymer", this refers to the amount of the additive by weight of polymer component inclusive of (solid and, if any, liquid) additives.

### Examples

In reference to the processes for the preparation of expandable polymers granulate by the extrusion process, the following examples were performed, where examples 1 and 4 to 8a do not comprise addition of cenospheres, and are not according to the claimed invention:

### Example 1

In the first example, the general purpose polystyrene - Synthos PS 585X, type CSX910 carbon black from Cabot Corporation with a BET surface of 73.6 m²/g and a sulphur content of 4000 ppm was used in concentration of 5 wt.%. The Synthos PS 585X and CSX910 were dosed to the main extruder together with spherically-shaped amorphous silicon dioxide from ELKEM in an amount of 1 wt.% and tricalcium phosphate (Expandia R) from Innophos in amount of 2 wt.% (both combined with carbon black in one masterbatch). In example 3a, the nano zinc oxide in combination with CSX910 (compounded in one masterbach) was used to prove its positive influence on the further "lambda" decrease. Additionally styrene copolymer with 40 wt.% concentrated para-tert-butylstyrene was added in example 8a to improve glass transition temperature of the polymer matrix. The polymeric flame retardant - (brominated styrene/butadiene rubber) in the concentration of 2 wt.%, together with thermal stabilizers: Irganox 1010 (0.1 wt.%), Irgafos 126 (0.1 wt.%), bromic acid scavenger: Epon 164 from Momentive (0.2 wt.%) and nucleating agent: Polywax 2000 (0.3 wt.%) were fed as powders mixture to the side arm extruder connected to the last section of "cooling extruder". The flame suppressor (cenospheres) was added together with athermanous fillers in the form of masterbach, in examples 2, 3 and 3a. In examples 8 and 8a the silane was used for comparison to improve additives dispersion, thus cell structure uniformity. The pentane and isopentane mixture 85/15% in the concentration of 5.5 wt.% were fed to the last section of the main extruder.

### Example 2

The extrusion process of Example 1 was used with the following components:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2 wt.%
- Pentane / isopentane mixture (85/15 %): 5.5 wt.%
- Nucleating agent (Polywax 2000): 0.3 %

### Example 3

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 3a

The following components were used:
- General purpose polystyrene Synthos PS 585X with MFI 8 g/10 min.
- Carbon black CSX910/Nano ZnO (5:1): 6 wt.%
- Spherically-shaped amorphous silicon dioxide: 1 wt.%
- Tricalcium phosphate: 2 wt%
- Cenospheres: 3 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 4

The following components were used:
- General purpose polystyrene Synthos PS 585X with MFI 8 g/10 min.
- Carbon black CSX910: 5 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 5

The following components were used:
- General purpose polystyrene Synthos PS 585X with MFI 8 g/10 min.
- Carbon black CSX910: 6 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 6

- General purpose polystyrene Synthos PS 585X with MFI 8 g/10 min.
- Carbon black CSX910: 7 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 7

- General purpose polystyrene Synthos PS 585X with MFI 8 g/10 min.
- Carbon black CSX910: 8 wt.%
- Polymeric flame retardant (brominated styrene/butadiene rubber): 2.0 w%
- Bicumyl: 0.2 wt.%
- Pentane / isopentane mixture (85/15 %): 5.5 wt.%
- Nucleating agent (Polywax 2000): 0.3 %

### Example 8

The following components were used:
- General purpose polystyrene Synthos PS 585X with MFI 8 g/10 min.
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber): 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

### Example 8a

The following components were used:
- General purpose polystyrene Synthos PS 585X with MFI 8 g/10 min.
- General purpose polystyrene Synthos PS 585X modified by comonomer in content of 40 %: 15 wt% (i.e 6 % of p-TBS in the total mixture).
- Carbon black CSX910: 5 wt.%
- Spherically-shaped amorphous silicon dioxide: 1 wt.%
- Tricalcium phosphate: 2 wt%
- Polymeric flame retardant (brominated styrene/butadiene rubber): 2.0 w%
- Silane (triethoxy(phenyl)silane): 0.01 wt.%
- Bicumyl: 0.2 wt.%
- Pentane / isopentane mixture (85/15 %): 5.5 wt.%
- Nucleating agent (Polywax 2000): 0.3 wt.%

**Table 1. Examples summary.**

| Components (wt.%) | Ex. 1* | Ex. 2 | Ex. 3 | Ex. 3a | Ex. 4* | Ex. 5* | Ex. 6* | Ex. 7* | Ex. 8* | Ex. 8a* |
|---|---|---|---|---|---|---|---|---|---|---|
| GP585X with 40 % of p-TBS | | | | | | | | | | 15 (6% p-TBS in composition) |
| CSX910 | 5 | 5 | 5 | - | 5 | 6 | 7 | 8 | 5 | 5 |
| CSX910/NanoZnO (5:1) | - | - | - | 6 | - | - | - | - | - | - |
| Silica | 1 | 1 | 1 | 1 | - | - | - | - | 1 | 1 |
| Tricalcium phosphate | 2 | 2 | 2 | 2 | - | - | - | - | 2 | 2 |
| Cenospheres | - | 3 | 3 | 3 | - | - | - | - | - | - |
| Flame retardant | 2 | 2 | 2 | 2 | 2 | 2 | 2 | 2 | 2 | 2 |
| Silane | - | - | - | - | - | - | - | - | 0.01 | 0.01 |
| Bicumyl | 0.2 | - | 0.2 | 0.2 | 0.2 | 0.2 | 0.2 | 0.2 | 0.2 | 0.2 |
| Polywax 2000 | 0.3 | 0.3 | 0.3 | 0.3 | 0.3 | 0.3 | 0.3 | 0.3 | 0.3 | 0.3 |
| Pentane/Isopentane | 5.5 | 5.5 | 5.5 | 5.5 | 5.5 | 5.5 | 5.5 | 5.5 | 5.5 | 5.5 |

| | | | | | | | | | | |
|---|---|---|---|---|---|---|---|---|---|---|
| *Examples 1 and 4 to 8a do not comprise addition of cenospheres, and are not according to the claimed invention | | | | | | | | | | |

**Table 2. Final product parameters at ca. 18.5 g/l**

| Parameter | Ex. 1* | Ex. 2 | Ex. 3 | Ex. 3a | Ex. 4* | Ex. 5* | Ex. 6* | Ex. 7* | Ex. 8* | Ex. 8a* |
|---|---|---|---|---|---|---|---|---|---|---|
| Glass transition (°C)/ASTM D7426/ | 103 | 103 | 104 | 103 | 101 | 100 | 100 | 98 | 103 | 108 |
| Thermal conductivity (mW/m·K) | 30.1 | 30.3 | 30.3 | 29.4 | 30.8 | 30.6 | 30.2 | 29.8 | 30.0 | 30.1 |
| Flammability /EN 13163/ | + | + | + | + | + | - | - | - | + | + |
| Flammability /DIN 4102 B1/B2/ | B2 | B2 | B1 | B1 | - | - | - | - | B2 | B2 |
| Compressive stress at 10% def. (MPa) /EN 13163/ | 80 | 80 | 79 | 81 | 71 | 67 | 62 | 61 | 82 | 95 |
| Bending strength (MPa) /EN 13163/ | 195 | 191 | 190 | 191 | 190 | 185 | 169 | 152 | 189 | 205 |

| | | | | | | | | | | |
|---|---|---|---|---|---|---|---|---|---|---|
| Passed (+ or B2 or B1); Not passed (-) *Examples 1 and 4 to 8a do not comprise addition of cenospheres, and are not according to the claimed invention | | | | | | | | | | |

Examples 9 to 11 do not comprise addition of cenospheres, and are not according to the claimed invention. Example 12 does not comprise addition of athermanous additive, and is not according to the claimed invention.

### Example 9

In this and the following examples, the method of production was changed to suspension polymerization. The same carbon black CSX910 from Cabot Corporation in the concentration 5 wt.% was used in masterbatch form, based on general purpose polystyrene-Synthos PS 585X. Comonomer (para-tert-butylstyrene, p-TBS) was used in the mixture of styrene in example 16. In examples 11-16 with additional fillers: tricalcium phosphate, cenospheres, silica and nano zinc oxide were jointly compounded with carbon black, and coated by polymeric silane first to improve its affinity to the organic phase (monomer). The polymeric flame retardant system - (brominated styrene/butadiene rubber) in the concentration of 2.5 wt.% together with dicumyl peroxide in the concentration 1.0 wt.%, and nucleating agent: Polywax 1000 (0.1 wt.%) were added in pure powder form. Pentane and isopentane mixture (85/15) in a concentration of 6.0 wt.% was dosed to the closed reactor during the second stage of polymerization.

### Example 10

The same process was used as in Example 9 and the following components:
- Carbon black CSX910: 6 wt.%
- polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 11

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 12

The same process was used and the following components:
- Carbon black CSX910: 5 wt.%
- Cenospheres pre-coated with oligomeric silane (Dynasylan 6598): 1 wt.%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13

The same process was used and the following components:
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 13a

The same process was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Tricalcium phosphate pre-coated with oligomeric silane (Dynasylan 6598): 1 wt%
- Polymeric flame retardant (brominated styrene/butadiene rubber): 2.5 wt.%
- Dicumyl peroxide: 1.0 wt.%
- Pentane / isopentane mixture (85/15 %): 6.0 wt.%
- Nucleating agent (Polywax 1000): 0.1 %

### Example 14

The same process was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate pre-coated with oligomeric silane (Dynasylan 6598): 1 wt%
- Cenospheres pre-coated with oligomeric silane (Dynasylan 6598): 2 wt.%
- Polymeric flame retardant (brominated styrene/butadiene rubber): 2.0 wt.%
- Dicumyl peroxide: 0.8 wt.%
- Pentane / isopentane mixture (85/15 %): 6.0 wt.%
- Nucleating agent (Polywax 1000): 0.2 %

### Example 15

- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber): 2.0 w%
- Dicumyl peroxide: 0.8 wt.%
- Pentane / isopentane mixture (85/15 %): 6.0 wt.%
- Nucleating agent (Polywax 1000): 0.1 %

### Example 16

- para-tert-butylstyrene: 2 wt%
- Carbon black CSX910: 5 wt.%
- Spherically-shaped amorphous silicon dioxide pre-coated with oligomeric silane (Dynasylan 6598): 1 wt.%
- Cenospheres pre-coated with oligomeric silane (Dynasylan 6598): 1 wt.%
- Polymeric flame retardant (brominated styrene/butadiene rubber): 2.0 w%
- Dicumyl peroxide: 0.8 wt.%
- Pentane / isopentane mixture (85/15 %): 6.0 wt.%
- Nucleating agent (Polywax 1000): 0.1 %

**Table 3. Examples summary.**

| Components (wt.%) | Ex. 9* | Ex. 10* | Ex. 11* | Ex. 12* | Ex. 13 | Ex. 13a | Ex. 14 | Ex. 15 | Ex. 16 |
|---|---|---|---|---|---|---|---|---|---|
| p-TBS | | | | | | | | | 2 |
| CSX910 | 5 | 6 | 5 | 5 | 5 | - | 5 | 5 | 5 |
| CSX910/NanoZnO (5:1) | - | - | - | - | - | 6 | - | - | - |
| Silica | - | - | 1 | - | 1 | 1 | 1 | 1 | 1 |
| Cenospheres | - | - | - | 1 | 1 | 1 | 2 | 1 | 1 |
| Tricalcium phosphate | | | 1 | | 1 | 1 | 1 | | |
| Flame retardant | 2.5 | 2.5 | 2.5 | 2.5 | 2.5 | 2.5 | 2 | 2 | 2 |
| Dicumyl peroxide | 1.0 | 1.0 | 1.0 | 1.0 | 1.0 | 1.0 | 0.8 | 0.2 | 0.2 |
| Polywax 1000 | 0.1 | 0.1 | 0.1 | 0.1 | 0.1 | 0.1 | 0.2 | 0.1 | 0.1 |
| Pentane/Isopentane | 6.0 | 6.0 | 6.0 | 6.0 | 6.0 | 6.0 | 5.5 | 5.5 | 5.5 |

| | | | | | | | | | |
|---|---|---|---|---|---|---|---|---|---|
| *Examples 9 to 11 do not comprise addition of cenospheres, and are not according to the claimed invention. Example 12 does not comprise addition of athermanous additive, and is not according to the claimed invention. | | | | | | | | | |

**Table 4. Final product parameters at ca. 19.5 g/l**

| **Parameter** | **Ex. 9*** | **Ex. 10*** | **Ex. 11*** | **Ex. 12*** | **Ex. 13** | **Ex. 13a** | **Ex. 14** | **Ex. 15** | **Ex. 16** |
|---|---|---|---|---|---|---|---|---|---|
| Glass transition (°C)/ASTM D7426/ | 103 | 101 | 102 | 103 | 102 | 103 | 102 | 103 | 106 |
| Thermal conductivity (mW/m·K) | 30.8 | 30.3 | 30.0 | 30.7 | 30.1 | 29.5 | 30.1 | 30.0 | 29.9 |
| Flammability /EN 13163/ | + | + | + | + | + | + | + | + | + |
| Flammability /DIN 4102 B1/B2/ | B2 | - | B2 | B2 | B1 | B1 | B1 | B2 | B2 |
| Compressive stress at 10% def. (MPa) / EN 13163/ | 68 | 62 | 74 | 69 | 74 | 78 | 76 | 72 | 86 |
| Bending strength (MPa) | 174 | 168 | 185 | 182 | 186 | 187 | 183 | 180 | 200 |

| | | | | | | | | | |
|---|---|---|---|---|---|---|---|---|---|
| Passed (+ or B2 or B1)); Not passed (-) *Examples 9 to 11 do not comprise addition of cenospheres, and are not according to the claimed invention. Example 12 does not comprise addition of athermanous additive, and is not according to the claimed invention. | | | | | | | | | |

Examples 17 to 19 do not comprise addition of cenospheres, and are not according to the claimed invention. Example 20 does not comprise addition of athermanous additive, and is not according to the claimed invention.

### Example 17

In this example, the method of styrene polymerization was changed to continuous mass in three reactors cascade. The polymerization of styrene was initiated by heating. The same carbon black CSX910 from Cabot Corporation in the concentration 5 wt.% was used in powder form. The polymeric flame retardant system - (brominated styrene/butadiene rubber) in the concentration of 2.5 wt.% together with bicumyl peroxide in a concentration 0.5 wt.%, and nucleating agent: Polywax 2000 (0.2 wt.%) were added in pure powder form to the extruding raw polystyrene just after degassing of polymer. Pentane and isopentane mixture 85/15 % in the concentration 5.5 wt.% is dosed to extruder. The granulate form was obtained by underwater pelletizing. In examples 18, 19, 21, 21a, 22, the minerals: tricalcium phosphate, cenospheres, silica were coated by silane and jointly compounded to improve their dispersion in the polymer. The comonomer (p-TBS) was added in the last example (Ex. 22) to increase the polymer glass transition.

### Example 18

The method was changed again, namely one reactor for continuous mass polymerization was used. The polymerization of pure styrene was initiated by benzoyl peroxide 0.12 %. The carbon black was added as masterbatch based on Synthos PS 585X.

The components used were as follows:
- Carbon black CSX910: 5 wt.%
- Spherically-shaped amorphous silicon dioxide pre-coated with oligomeric silane (Dynasylan 6598): 1 wt.%
- Polymeric flame retardant (brominated styrene/butadiene rubber): 2.5 wt.%
- Bicumyl: 0.5 wt.%
- Pentane / isopentane mixture (85/15 %): 5.5 wt.%
- Nucleating agent (Polywax 2000): 0.2 %.

### Example 19

The same process as in example 17 was used, with the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Polymeric flame retardant (brominated styrene/butadiene rubber): 2.5 wt.%
- Bicumyl: 0.5 wt.%
- Pentane / isopentane mixture (85/15 %): 5.5 wt.%
- Nucleating agent (Polywax 2000): 0.2 %

### Example 20

The same process as in example 17 was used, with the following components:
- Carbon black CSX910: 5 wt.%
- Cenospheres pre-coated with oligomeric silane (Dynasylan 6598): 3 wt.%
- Polymeric flame retardant (brominated styrene/butadiene rubber): 2.0 wt.%
- Bicumyl: 0.4 wt.%
- Pentane / isopentane mixture (85/15 %): 5.5 wt.%
- Nucleating agent (Polywax 2000): 0.2 %

### Example 21

The same process as in Example 17 was used and the following components:
- Carbon black CSX910: 5 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber): 1.5 wt.%
- Bicumyl: 0.3 wt.%
- Pentane / isopentane mixture (85/15 %): 5.5 wt.%
- Nucleating agent (Polywax 2000): 0.2 %

### Example 21a

The same process (Ex 17) was used and the following components:
- Carbon black CSX910/Nano ZnO (5:1): 6 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 4 wt.%
- Polymeric flame retardant (brominated styrene/butadiene rubber): 1.5 wt.%
- Bicumyl peroxide: 0.3 wt.%
- Pentane / isopentane mixture (85/15 %): 5.5 wt.%
- Nucleating agent (Polywax 2000): 0.2 %

### Example 22

The same process (Ex 17) was used and the following components:
- para-tert-butylstyrene: 5 wt%
- Carbon black CSX910: 3 wt.%
- Spherically-shaped amorphous silicon dioxide pre-coated with oligomeric silane (Dynasylan 6598): 1 wt.%
- Tricalcium phosphate coated by Dynasylan 6598: 2 wt%
- Cenospheres pre-coated with oligomeric silane (Dynasylan 6598): 3 wt.%
- Polymeric flame retardant (brominated styrene/butadiene rubber): 2.0 wt.%
- Dicumyl peroxide: 0.4 wt.%
- Pentane / isopentane mixture (85/15 %): 5.5 wt.%
- Nucleating agent (Polywax 2000): 0.3 %

**Table 5. Examples summary.**

| **Components (wt.%)** | **Ex. 17*** | **Ex. 18*** | **Ex. 19*** | **Ex. 20*** | **Ex. 21** | **Ex. 21a** | **Ex. 22** |
|---|---|---|---|---|---|---|---|
| p-TBS | | | | | | | 5 |
| CSX910 | 5 | 5 | 5 | 5 | 5 | - | 3 |
| CSX910/Nano ZnO (5:1) | - | - | - | - | - | 6 | - |
| Silica | - | 1 | 1 | - | 1 | 1 | 1 |
| Tricalcium phosphate | | | 2 | | 2 | 2 | 2 |
| Cenospheres | - | - | - | 3 | 4 | 4 | 5 |
| Flame retardant | 2.5 | 2.5 | 2.5 | 2.0 | 1.5 | 1.5 | 1.0 |
| Bicumyl | 0.5 | 0.5 | 0.5 | 0.4 | 0.3 | 0.3 | 0.2 |
| Polywax 2000 | 0.2 | 0.2 | 0.2 | 0.2 | 0.2 | 0.2 | 0.3 |
| Pentane/Isopentane | 5.5 | 5.5 | 6.0 | 6.0 | 6.0 | 6.0 | 5.5 |

**Table 6. Final product parameters at ca. 20.0 g/l**

| **Parameter** | **Ex. 17*** | **Ex. 18*** | **Ex. 19*** | **Ex. 20*** | **Ex. 21** | **Ex. 21a** | **Ex. 22** |
|---|---|---|---|---|---|---|---|
| Glass transition (°C)/ASTM D7426/ | 101 | 102 | 103 | 100 | 103 | 103 | 109 |
| Thermal conductivity (mW/m-K) | 30.7 | 30.0 | 29.7 | 30.4 | 29.8 | 29.2 | 31.0 |
| Flammability (EN 13163) | + | + | + | + | + | + | + |
| Flammability (DIN 4102 B1/B2) | B2 | B2 | B2 | B1 | B1 | B1 | B1 |
| Compressive stress at 10% def. (MPa) | 67 | 66 | 71 | 63 | 70 | 69 | 92 |
| Bending strength (MPa) | 172 | 171 | 179 | 176 | 179 | 180 | 208 |

| | | | | | | | |
|---|---|---|---|---|---|---|---|
| Passed (+ or B2 or B1); Not passed (-) * Examples 17 to 19 do not comprise addition of cenospheres, and are not according to the claimed invention. Example 20 does not comprise addition of athermanous additive, and is not according to the claimed invention. | | | | | | | |

## Claims

1. Use of cenospheres having
i) a particle size distribution, as determined by laser diffraction, in the range of 5-600 µm;
ii) a mineral composition of
- 27-33 wt.% of Al₂O₃,
- 55-65 wt.% of SiO₂,
- 4-8 wt.% of Fe₂O₃, and
- optionally further oxides;
iii) a gas composition of
- 30-95 %, preferably 50-85 % of CO₂,
- 5-70 %, preferably 15-50 % of nitrogen, and
- optionally further gases;
for improving the self-extinguishing properties of polymer foam, such foam
a) being prepared from polymer based on vinyl aromatic monomer (and optionally one or more comonomers) and
b) containing one or more athermanous additives,
the improvement being measured in accordance with DIN 4102 B1 and B2 test method,
wherein the amount of cenospheres is 0.1-20 % by weight, based on the weight of polymer.

2. The use according to claim 1, wherein the cenospheres further have
iv) a moisture content, according to Omya test method GBRN LTM 007, of 0.01-1.5%, preferably 0.05-0.8 %.

3. The use according to any one of the preceding claims, wherein the athermanous additive is selected from inorganic powder materials, graphite, petroleum coke, graphitized carbon black, graphite oxides, graphene, and mixtures thereof, preferably silica, carbon black, calcium phosphate, and graphite.

4. The use according to claim 3, wherein component b) is a combination of
ba) a mineral component containing silica, calcium phosphate, or mixtures thereof, and
bb) carbon black.

5. The use according to claim 4, wherein
ba1) the silica is amorphous and has
- a BET surface of 3 to 80 m²/g, measured according to a procedure disclosed in the description,
- a particle size distribution within the range of from 3 nm to 1,000 nm, measured according to a procedure disclosed in the description, and the silica, if used, is present in an amount of 0.1 to less than 2 wt.%, based on the weight of the polymer,
ba2) the calcium phosphate has a particle size of 0.1 µm to 20 µm, measured by laser diffraction, and the calcium phosphate, if used, is present in an amount of 0.1 to 10 wt.%, based on the weight of polymer, and
bb) the carbon black has
- a BET surface of more than 40 up to 250 m²/g, measured according to ASTM 6556, and
- a sulphur content in the range of from 50 to 20,000 ppm, as measured according to ASTM D 1619, and the carbon black is present in an amount of 0.1 to 12 wt.%, based on the weight of the polymer.

6. The use according to any one of the preceding claims, wherein the amount of cenospheres is 0.5-12 % by weight, in particular 1-8 % by weight, based on the weight of polymer.

7. The use according to any one of the preceding claims, wherein the polymer is a styrene homopolymer or styrene copolymer.

8. The use according to claim 7, wherein the polymer is a styrene copolymer and the comonomer is p-tert-butylstyrene.

9. Extrusion process for the preparation of expandable polymer granulate, the process comprising the following steps:
i) feeding vinyl aromatic polymer or copolymer into an extruder,
ii) adding athermanous additive or additives, and cenospheres,
iii) injecting blowing agent into the melt of polymer or copolymer,
iv) extruding the homogenous blend, and
v) pelletizing the blend in an underwater pelletizer, so as to obtain the granulate;
the cenospheres having
i) a particle size distribution, as determined by laser diffraction, in the range of 5-600 µm;
ii) a mineral composition of
- 27-33 wt.% of Al₂O₃,
- 55-65 wt.% of SiO₂,
- 4-8 wt.% of Fe₂O₃, and
- optionally further oxides;
iii) a gas composition of
- 30-95 %, preferably 50-85 % of CO₂,
- 5-70 %, preferably 15-50 % of nitrogen, and
- optionally further gases;
wherein the amount of cenospheres is 0.1-20 % by weight, based on the weight of polymer.

10. Aqueous suspension polymerization process for the preparation of expandable polymer granulate, the process comprising the steps:
i) providing a mixture comprising
11) at least one suspending agent which is an inorganic acid salt,
12) at least one suspension stabilizer selected from the group of anionic surface active compounds and/or high molecular weight compounds, and
13) water (preferably demineralized water),
ii) adding a vinyl aromatic monomer and optionally one or more comonomers to the mixture, and subsequently adding
ii1) optional polymeric suspension aid,
ii2) athermanous filler,
ii3) flame retardant,
ii4) cenospheres, and
ii5) at least one peroxide (or the mixture of two or more peroxides) as reaction initiator, and then polymerizing the monomer and optional comonomers in the suspension phase,
iii) continuing the polymerization,
iv) adding the blowing agent during or after the polymerization step,
v) cooling, and then separating the granulate from the water;
the cenospheres having
i) a particle size distribution, as determined by laser diffraction, in the range of 5-600 µm;
ii) a mineral composition of
- 27-33 wt.% of Al₂O₃,
- 55-65 wt.% of SiO₂,
- 4-8 wt.% of Fe₂O₃, and
- optionally further oxides;
iii) a gas composition of
- 30-95 %, preferably 50-85 % of CO₂,
- 5-70 %, preferably 15-50 % of nitrogen, and
- optionally further gases;
wherein the amount of cenospheres is 0.1-20 % by weight, based on the weight of polymer.

11. Continuous mass process for the preparation of expandable polymer granulate, the process comprising the following steps:
i) providing continuously to a mass prepolymerization reactor (or the first from a cascade reactor) a stream of:
i1) vinyl aromatic monomer and optionally at least one comonomer,
i2) at least one additive solution, and
i3) optionally recycled monomer,
ii) continuing polymerization in the prepolymerization reactor or the sequence of cascade reactors,
iii) adding of athermanous fillers, and cenospheres,
iv) degassing the polymer,
v) feeding the polymer in molten state into the extruder,
vi) optionally adding a flame retardant system including synergist and thermal stabilisers,
vii) injecting the blowing agent,
viii) extruding the homogenous polymer blend, and
ix) pelletizing in an underwater pelletizer, so as to obtain the granulate,
the process comprising addition of cenospheres having
i) a particle size distribution, as determined by laser diffraction, in the range of 5-600 µm;
ii) a mineral composition of
- 27-33 wt. % of Al₂O₃,
- 55-65 wt. % of SiO₂,
- 4-8 wt. % of Fe₂O₃, and
- optionally further oxides;
iii) a gas composition of
- 30-95 %, preferably 50-85 % of CO₂,
- 5-70 %, preferably 15-50 % of nitrogen, and
- optionally further gases;
wherein the amount of cenospheres is 0.1-20 % by weight, based on the weight of polymer.

12. Expandable polymer granulate, obtained by the process of any of claims 9 to 11.

13. Expanded polymer foam, as obtained by expansion of the granulate according to claim 12.

## Patentansprüche

1. Verwendung von Mikrohohlkugeln, die
i) eine Teilchengrößenverteilung, bestimmt durch Laserbeugung, im Bereich von 5-600 µm,
ii) eine Mineralzusammensetzung mit
- 27-33 Gew.-% Al₂O₃,
- 55-65 Gew.-% SiO₂,
- 4-8 Gew.-% Fe₂O₃ und
- gegebenenfalls weiteren Oxiden,
iii) eine Gaszusammensetzung mit
- 30-95 %, bevorzugt 50-85 % CO₂,
- 5-70 %, bevorzugt 15-50 % Stickstoff und
- gegebenenfalls weiteren Gasen,
aufweisen,
zur Verbesserung der selbstlöschenden Eigenschaften von Polymerschaum, wobei der Schaum
a) hergestellt ist aus einem Polymer basierend auf vinylaromatischem Monomer (und gegebenenfalls einem oder mehreren Comonomeren) und
b) ein oder mehr athermane(s) Additiv(e) enthält,
wobei die Verbesserung nach den Prüfverfahren DIN 4102 B1 und B2 gemessen wird,
wobei die Menge von Mikrohohlkugeln 0,1-20 Gewichtsprozent beträgt, bezogen auf das Gewicht von Polymer.

2. Verwendung nach Anspruch 1, wobei die Mikrohohlkugeln außerdem
iv) einen Feuchtigkeitsgehalt, nach dem Omya-Prüfverfahren GBRN LTM 007, von 0,01-1,5 % aufweisen, bevorzugt 0,05-0,8 %.

3. Verwendung nach einem der vorhergehenden Ansprüche, wobei das athermane Additiv ausgewählt ist aus anorganischen Pulvermaterialien, Graphit, Petrolkoks, graphitiertem Ruß, Graphitoxiden, Graphen und Mischungen davon, vorzugsweise Kieselsäure, Ruß, Calciumphosphat und Graphit.

4. Verwendung nach Anspruch 3, wobei die Komponente b) eine Kombination ist mit
ba) einer mineralischen Komponente, die Kieselsäure, Kalziumphosphat oder Mischungen davon enthält, und
bb) Ruß.

5. Verwendung nach Anspruch 4, wobei
ba1) die Kieselsäure amorph ist und
- eine BET-Oberfläche von 3 bis 80 m²/g besitzt, gemessen nach einem Verfahren, wie es in der Beschreibung offenbart ist,
- eine Teilchengrößenverteilung im Bereich von 3 nm bis 1000 nm besitzt, gemessen nach einem Verfahren, wie es in der Beschreibung offenbart ist, und
die Kieselsäure, wenn sie verwendet wird, in einer Menge von 0,1 bis weniger als 2 Gew.-% vorhanden ist, bezogen auf das Gewicht des Polymers,
ba2) das Kalziumphosphat eine Teilchengröße von 0,1 µm bis 20 µm besitzt, gemessen durch Laserbeugung, und
das Kalziumphosphat, wenn es verwendet wird, in einer Menge von 0,1 bis 10 Gew.-% vorhanden ist, bezogen auf das Gewicht von Polymer, und
bb) der Ruß besitzt
- eine BET-Oberfläche von mehr als 40 bis zu 250 m²/g, gemessen gemäß ASTM 6556,
und
- einen Schwefelgehalt im Bereich von 50 bis 20.000 ppm, gemessen nach ASTM D1619, und
der Ruß in einer Menge von 0,1 bis 12 Gew.-% vorhanden ist, bezogen auf das Gewicht des Polymers.

6. Verwendung nach einem der vorhergehenden Ansprüche, wobei die Menge von Mikrohohlkugeln 0,5-12 Gew.-% beträgt, insbesondere 1-8 Gew.-%, bezogen auf das Gewicht von Polymer.

7. Verwendung nach einem der vorhergehenden Ansprüche, wobei das Polymer ein Styrolhomopolymer oder Styrolcopolymer ist.

8. Verwendung nach Anspruch 7, wobei das Polymer ein Styrolcopolymer ist und das Comonomer p-tert-Butylstyrol ist.

9. Extrusionsverfahren zur Herstellung von expandierbarem Polymergranulat, wobei das Verfahren die folgenden Schritte umfasst:
i) Zuführen von vinylaromatischem Polymer oder Copolymer in einen Extruder,
ii) Zufügen von athermanem Additiv oder Additiven und Mikrohohlkugeln,
iii) Einspritzen von Treibmittel in die Schmelze von Polymer oder Copolymer,
iv) Extrudieren des homogenen Gemisches und
v) Pelletieren des Gemisches in einer Unterwasserpelletiervorrichtung, um das Granulat zu erhalten,
wobei die Mikrohohlkugeln
i) eine Teilchengrößenverteilung, bestimmt durch Laserbeugung, im Bereich von 5-600 µm,
ii) eine Mineralzusammensetzung mit
- 27-33 Gew.-% Al₂O₂,
- 55-65 Gew.-% SiO₂,
- 4-8 Gew.-% Fe₂O₂ und
- gegebenenfalls weiteren Oxiden,
iii) eine Gaszusammensetzung mit
- 30-95 %, bevorzugt 50-85 % CO₂,
- 5-70 %, bevorzugt 15-50 % Stickstoff und
- gegebenenfalls weiteren Gasen,
aufweisen,
wobei die Menge von Mikrohohlkugeln 0,1 bis 20 Gewichtsprozent beträgt, bezogen auf das Gewicht von Polymer.

10. Wässriges Suspensionspolymerisationsverfahren zur Herstellung von expandierbarem Polymergranulat, wobei das Verfahren die folgenden Schritte umfasst:
i) Bereitstellen einer Mischung umfassend
i1) mindestens ein Suspendiermittel, welches ein Salz anorganischer Säure ist,
i2) mindestens ein Suspensionsstabilisator ausgewählt aus der Gruppe anionischer oberflächenaktiver Verbindungen und/oder Verbindungen hohen Molekulargewichts und
i3) Wasser (bevorzugt entmineralisiertes Wasser),
ii) Zugeben von vinylaromatischem Monomer und gegebenenfalls eines oder mehrerer Comonomere zu der Mischung, und anschließend Zugeben von
ii1) gegebenenfalls polymerischem Suspendierhilfsmittel,
ii2) athermanem Füllstoff,
ii3) Flammschutzmittel,
ii4) Mikrohohlkugeln und
ii5) mindestens einem Peroxid (oder Mischung von zwei oder mehr Peroxiden) als Reaktionsinitiator, und dann Polymerisieren des Monomers und gegebenenfalls der Comonomere in der Suspensionsphase,
iii) Fortsetzen der Polymerisation,
iv) Zufügen des Treibmittels während oder nach dem Polymerisationsschritt,
v) Abkühlen, dann Abtrennen des Granulats von dem Wasser,
wobei die Mikrohohlkugeln
i) eine Teilchengrößenverteilung, bestimmt durch Laserbeugung, im Bereich von 5-600 µm,
ii) eine Mineralzusammensetzung mit
- 27-33 Gew.-% Al₂O₃,
- 55-65 Gew.-% SiO₂,
- 4-8 Gew.-% Fe₂O₃ und
- gegebenenfalls weiteren Oxiden,
iii) eine Gaszusammensetzung mit
- 30-95 %, bevorzugt 50-85 % CO₂,
- 5-70 %, bevorzugt 15-50 % Stickstoff und
- gegebenenfalls weiteren Gasen,
aufweisen,
wobei die Menge von Mikrohohlkugeln 0,1 bis 20 Gewichtsprozent beträgt, bezogen auf das Gewicht von Polymer.

11. Verfahren zur Herstellung von expandierbarem Polymergranulat in kontinuierlicher Masse, wobei das Verfahren die folgenden Schritte umfasst:
i) kontinuierliches Bereitstellen in einem Massenvorpolymerisationsreaktor (oder im ersten Reaktor eines Kaskadenreaktors) von einem Strom von:
ii1) vinylaromatischem Monomer und gegebenenfalls mindestens einem Comonomer,
ii2) mindestens einer Additivlösung, und
ii3) gegebenenfalls zurückgeführtem Monomer,
ii) Fortführen der Polymerisation in dem Vorpolymerisationsreaktor oder in der Reihe von Kaskadenreaktoren,
iii) Zufügen von athermanen Füllstoffen und Mikrohohlkugeln,
iv) Entgasen des Polymers,
v) Zuführen des Polymers in geschmolzenem Zustand in den Extruder,
vi) gegebenenfalls Zufügen eines Flammschutzsystems einschließlich Synergisten und thermischer Stabilisatoren,
vii) Einspritzen des Treibmittels,
viii) Extrudieren des homogenen Polymergemisches und
ix) Pelletieren in einer Unterwasserpelletiervorrichtung, um das Granulat zu erhalten,
wobei das Verfahren die Zugabe von Mikrohohlkugeln umfasst, welche
i) eine Teilchengrößenverteilung, bestimmt durch Laserbeugung, im Bereich von 5-600 µm,
ii) eine Mineralzusammensetzung mit
- 27-33 Gew.-% Al₂O₃,
- 55-65 Gew.-% SiO₂,
- 4-8 Gew.-% Fe₂O₃, und
- gegebenenfalls weiteren Oxiden,
iii) eine Gaszusammensetzung mit
- 30-95 %, bevorzugt 50-85 % CO₂,
- 5-70 %, bevorzugt 15-50 % Stickstoff und
- gegebenenfalls weiteren Gasen,
aufweisen,
wobei die Menge von Mikrohohlkugeln 0,1 bis 20 Gewichtsprozent beträgt, bezogen auf das Gewicht von Polymer.

12. Expandierbares Polymergranulat, erhalten durch das Verfahren gemäß einem der Ansprüche 9 bis 11.

13. Expandierter Polymerschaum, erhalten durch die Expansion des Granulats gemäß Anspruch 12.

## Revendications

1. Utilisation de cénosphères présentant
i) une distribution de tailles de particule, telle que déterminée par diffraction laser, dans la plage de 5 à 600 µm ;
ii) une composition minérale de
- 27 à 33 % en poids d'Al₂O₃,
- 55 à 65 % en poids de SiO₂,
- 4 à 8 % en poids de Fe₂O₃, et
- facultativement d'autres oxydes ;
iii) une composition gazeuse de
- 30 à 95 %, de préférence 50 à 85 % de CO₂,
- 5 à 70 %, de préférence 15 à 50 % d'azote, et
- facultativement d'autres gaz ;
pour améliorer les propriétés d'auto-extinction d'une mousse polymère, une telle mousse
a) étant préparée à partir d'un polymère à base d'un monomère aromatique vinylique (et facultativement d'un ou de plusieurs comonomères) et
b) contenant un ou plusieurs additifs athermanes,
l'amélioration étant mesurée conformément au procédé d'essai DIN 4102 B1 et B2,
dans laquelle la quantité de cénosphères est de 0,1 à 20 % en poids, sur la base du poids du polymère.

2. Utilisation selon la revendication 1, dans laquelle les cénosphères présentent en outre iv) une teneur en humidité, conformément au procédé d'essai Omya GBRN LTM 007, de 0,01 à 1,5 %, de préférence de 0,05 à 0,8 %.

3. Utilisation selon l'une quelconque des revendications précédentes, dans laquelle l'additif athermane est sélectionné parmi les matériaux pulvérulents inorganiques, un graphite, un coke de pétrole, un noir de carbone graphitisé, les oxydes de graphite, un graphène, et les mélanges de ceux-ci, de préférence une silice, un noir de carbone, le phosphate de calcium, et un graphite.

4. Utilisation selon la revendication 3, dans laquelle un composant b) est une combinaison
ba) d'un composant minéral contenant une silice, du phosphate de calcium, ou des mélanges de ceux-ci, et
bb) d'un noir de carbone.

5. Utilisation selon la revendication 4, dans laquelle
ba1) la silice est amorphe et présente
- une surface BET de 3 à 80 m²/g, mesurée conformément à une procédure divulguée dans la description,
- une distribution de tailles de particule dans la plage de 3 nm à 1000 nm, mesurée conformément à une procédure divulguée dans la description, et
la silice, si elle est utilisée, est présente en une quantité de 0,1 à moins de 2 % en poids, sur la base du poids du polymère,
ba2) le phosphate de calcium présente une taille de particule de 0,1 µm à 20 µm, mesurée par diffraction laser, et
le phosphate de calcium, s'il est utilisé, est présent en une quantité de 0,1 à 10 % en poids, sur la base du poids du polymère, et
bb) le noir de carbone présente
- une surface BET de plus de 40 jusqu'à 250 m²/g, mesurée conformément à l'ASTM 6556, et
- une teneur en soufre dans la plage de 50 à 20 000 ppm, telle que mesurée conformément à l'ASTM D 1619, et
le noir de carbone est présent en une quantité de 0,1 à 12 % en poids, sur la base du poids du polymère.

6. Utilisation selon l'une quelconque des revendications précédentes, dans laquelle la quantité de cénosphères est de 0,5 à 12 % en poids, en particulier de 1 à 8 % en poids, sur la base du poids du polymère.

7. Utilisation selon l'une quelconque des revendications précédentes, dans laquelle le polymère est un homopolymère de styrène ou un copolymère de styrène.

8. Utilisation selon la revendication 7, dans laquelle le polymère est un copolymère de styrène et le comonomère est le p-tert-butylstyrène.

9. Procédé d'extrusion pour la préparation de granulés polymères expansibles, le procédé comprenant les étapes suivantes :
i) l'introduction d'un polymère ou copolymère de vinyle aromatique dans une extrudeuse,
ii) l'ajout d'un additif ou d'additifs athermanes, et de cénosphères,
iii) l'injection d'un agent d'expansion dans la masse fondue de polymère ou de copolymère,
iv) l'extrusion du mélange homogène, et
v) la formation de granulés à partir du mélange dans un granulateur sous eau, de manière à obtenir les granulés ;
les cénosphères présentant
i) une distribution de tailles de particule, telle que déterminée par diffraction laser, dans la plage de 5 à 600 µm ;
ii) une composition minérale de
- 27 à 33 % en poids d'Al₂O₃,
- 55 à 65 % en poids de SiO₂,
- 4 à 8 % en poids de Fe₂O₃, et
- facultativement d'autres oxydes ;
iii) une composition gazeuse de
- 30 à 95 %, de préférence 50 à 85 % de CO₂,
- 5 à 70 %, de préférence 15 à 50 % d'azote, et
- facultativement d'autres gaz ;
dans lequel la quantité de cénosphères est de 0,1 à 20 % en poids, sur la base du poids du polymère.

10. Procédé de polymérisation en suspension aqueuse pour la préparation de granulés polymères expansibles, le procédé comprenant les étapes suivantes :
i) la fourniture d'un mélange comprenant
i1) au moins un agent de mise en suspension qui est un sel d'acide inorganique,
i2) au moins un stabilisateur de suspension sélectionné dans le groupe des composés tensioactifs anioniques et/ou des composés de poids moléculaire élevé, et
i3) de l'eau (de préférence de l'eau déminéralisée),
ii) l'ajout d'un monomère aromatique vinylique et facultativement d'un ou de plusieurs comonomères au mélange, puis l'ajout
ii1) d'un auxiliaire polymère de mise en suspension facultatif,
ii2) d'une charge athermane,
ii3) d'un ignifuge,
ii4) de cénosphères, et
ii5) d'au moins un peroxyde (ou le mélange de deux peroxydes ou plus) en tant qu'initiateur de réaction, et ensuite la polymérisation du monomère et des comonomères facultatifs dans la phase en suspension,
iii) la poursuite de la polymérisation,
iv) l'ajout de l'agent d'expansion pendant ou après l'étape de polymérisation,
v) un refroidissement, et ensuite la séparation des granulés à partir de l'eau ;
les cénosphères présentant
i) une distribution de tailles de particule, telle que déterminée par diffraction laser, dans la plage de 5 à 600 µm ;
ii) une composition minérale de
- 27 à 33 % en poids d'Al₂O₃,
- 55 à 65 % en poids de SiO₂,
- 4 à 8 % en poids de Fe₂O₃, et
- facultativement d'autres oxydes ;
iii) une composition gazeuse de
- 30 à 95 %, de préférence 50 à 85 % de CO₂,
- 5 à 70 %, de préférence 15 à 50 % d'azote, et
- facultativement d'autres gaz ;
dans lequel la quantité de cénosphères est de 0,1 à 20 % en poids, sur la base du poids du polymère.

11. Procédé continu en masse pour la préparation de granulés polymères expansibles, le procédé comprenant les étapes suivantes :
i) la fourniture en continu à un réacteur de prépolymérisation en masse (ou le premier d'un réacteur en cascade) d'un courant :
i1) de monomère aromatique vinylique et facultativement d'au moins un comonomère,
i2) d'au moins une solution d'additif, et
i3) d'un monomère facultativement recyclé,
ii) la poursuite de la polymérisation dans le réacteur de prépolymérisation ou la séquence de réacteurs en cascade,
iii) l'ajout de charges athermanes, et de cénosphères,
iv) le dégazage du polymère,
v) l'introduction du polymère à l'état fondu dans l'extrudeuse,
vi) l'ajout facultatif d'un système ignifuge comprenant un synergiste et des stabilisateurs thermiques,
vii) l'injection de l'agent d'expansion,
viii) l'extrusion du mélange homogène de polymère, et
ix) la formation de granulés dans un granulateur sous eau, de manière à obtenir les granulés,
le procédé comprenant l'ajout de cénosphères présentant
i) une distribution de tailles de particule, telle que déterminée par diffraction laser, dans la plage de 5 à 600 µm ;
ii) une composition minérale de
- 27 à 33 % en poids d'Al₂O₃,
- 55 à 65 % en poids de SiO₂,
- 4 à 8 % en poids de Fe₂O₃, et
- facultativement d'autres oxydes ;
iii) une composition gazeuse de
- 30 à 95 %, de préférence 50 à 85 % de CO₂,
- 5 à 70 %, de préférence 15 à 50 % d'azote, et
- facultativement d'autres gaz ;
dans lequel la quantité de cénosphères est de 0,1 à 20 % en poids, sur la base du poids du polymère.

12. Granulés polymères expansibles, obtenus par le procédé selon l'une quelconque des revendications 9 à 11.

13. Mousse polymère expansée, telle qu'obtenue par l'expansion des granulés selon la revendication 12.
